# EUROPEAN PATENT APPLICATION

(11) **EP 4 369 733 A1**
(43) Date of publication of application: **15.05.2024**
(21) Application number: 22847990.3
(22) Date of filing: 24.05.2022
(51) Int. Cl.: H04Q 11/00, H04L 67/00

(54) **METHOD FOR PROCESSING CASCADED ONTS, AND APPARATUS AND SYSTEM**

(30) Priority: 29.07.2021 CN 202110866737
(71) Applicant: Huawei Technologies Co., Ltd., Shenzhen, Guangdong 518129 (CN)
(72) Inventor: LIN, Liankui, Shenzhen, Guangdong 518129 (CN); HAN, Yanru, Shenzhen, Guangdong 518129 (CN); ZHANG, Lun, Shenzhen, Guangdong 518129 (CN)
(74) Representative: Gill Jennings & Every LLP
(86) International application number: PCT/CN2022/094639
(87) International publication number: WO 2023/005378

(57) **Abstract**

Embodiments of this application disclose a cascaded optical network termination ONT processing method. The cascaded ONT processing method includes: A primary ONT receives an upstream service data packet from a secondary ONT. The upstream service data packet includes a user terminal identifier and a transmission path identifier of a transmission path through which a user terminal accesses the secondary ONT. The primary ONT establishes a transmission path correspondence table. After receiving a downstream service data packet from an OLT, the primary ONT adds, after a corresponding transmission path identifier is found in the transmission path correspondence table, the transmission path identifier to the downstream service data packet, and sends, to the secondary ONT, the downstream service data packet to which the transmission path identifier is added, to indicate the secondary ONT to send the downstream service data packet through a transmission path corresponding to the transmission path identifier. Embodiments of this application further disclose an ONT apparatus and a cascaded ONT system. The solutions disclosed in embodiments of this application can simplify a network architecture, and improve efficiency of forwarding service data on a cascaded ONT.

## Description

This application claims priority to Chinese Patent Application No. 202110866737.1, filed with the China National Intellectual Property Administration on July 29, 2021 and entitled "CASCADED ONT PROCESSING METHOD, APPARATUS, AND SYSTEM", which is incorporated herein by reference in its entirety.

### TECHNICAL FIELD

This application relates to the communication field, and in particular, to a cascaded ONT processing method, an apparatus, and a system.

### BACKGROUND

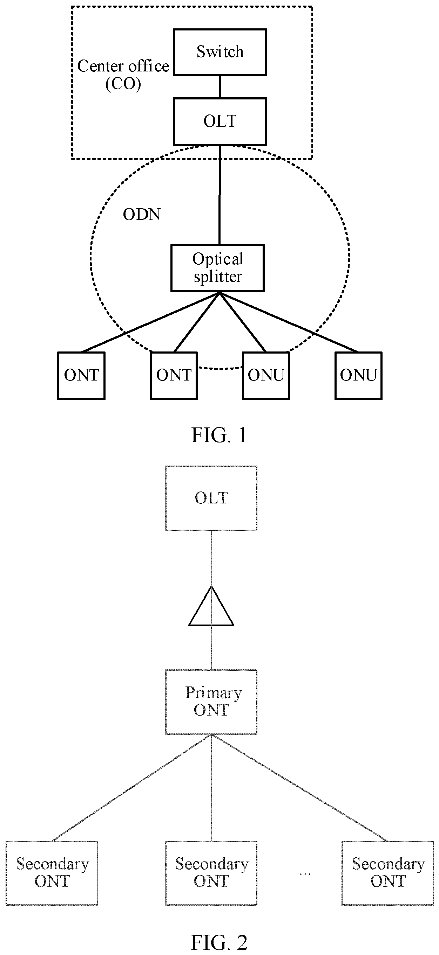

A passive optical network (Passive Optical Network, PON) technology is a point-to-multipoint optical fiber access technology. A PON system may include an optical line terminal (Optical Line Terminal, OLT), an optical distribution network (Optical Distribution Network, ODN), and at least one optical network unit (Optical Network Unit, ONU). The OLT is connected to the ODN, and the ODN is connected to a plurality of ONUs. Details are shown in FIG. 1. The OLT provides a network-side interface. The OLT is connected to an upper-layer network-side device (such as a switch or a router), and is connected to one or more lower-layer ODNs.

The ODN includes a passive optical splitter used for optical power distribution, a feeder optical fiber connected between the passive optical splitter and the OLT, and a distribution optical fiber connected between the passive optical splitter and the ONUs. During downstream data transmission, the ODN transmits downstream data of the OLT to the ONUs through the optical splitter. Similarly, during upstream data transmission, the ODN aggregates upstream data of the ONUs and transmits the aggregated upstream data to the OLT.

Generally, the OLT is usually located in a center office (center office, CO), and the ONU is located at or near a home of a user. The ONU provides a user-side interface, and is connected to the ODN. If the ONU also provides a user interface function, for example, the ONU provides an Ethernet user interface or a plain old telephone service (plain old telephone service, POTS) user interface, the ONU is referred to as an optical network termination (optical network termination, ONT). For ease of description, the ONT is used to represent the ONU and/or the ONT uniformly in the following.

The ONT is a terminal device, and one network user home has at least one ONT device. As a result, a total quantity of ONTs is large. To avoid a waste of resources and reduce costs, whether a hardware structure of the ONT can be simplified needs to be considered.

### SUMMARY

To simplify a hardware structure of an ONT and improve network processing efficiency, embodiments of this application provide a cascaded ONT processing method, an apparatus, and a system.

According to a first aspect, an embodiment of this application provides a cascaded ONT processing method, including:
In an upstream direction, after parsing an upstream service data packet from a secondary ONT, a primary ONT receives a user terminal identifier and a transmission path identifier of a transmission path through which a user terminal accesses the secondary ONT, where the user terminal identifier and the transmission path identifier are included in the upstream service data packet, and at least a part of data in the service data packet is sent by the user terminal to the secondary ONT. The primary ONT establishes and stores a transmission path correspondence table. The transmission path correspondence table includes a correspondence between the user terminal identifier, the transmission path identifier, and an identifier of the secondary ONT.

In a downstream direction, the primary ONT receives a downstream service data packet from an OLT, where the downstream service data packet includes a destination address, and the destination address corresponds to one user terminal identifier. The primary ONT adds, after a corresponding transmission path identifier is found in the transmission path correspondence table based on the user terminal identifier corresponding to the destination address, the transmission path identifier to the downstream service data packet. The primary ONT sends, to the secondary ONT, the downstream service data packet to which the transmission path identifier is added. The transmission path identifier indicates the secondary ONT to send the downstream service data packet through a transmission path corresponding to the transmission path identifier.

According to this embodiment, the primary ONT directly controls a forwarding path of the secondary ONT, so that the secondary ONT can directly send a service packet to the user terminal based on information about the transmission path identifier sent by the primary ONT, and addressing of the forwarding path is not required on the secondary ONT. In this way, forwarding efficiency of a network is improved, a hardware structure of the secondary ONT is also simplified, and therefore, hardware costs and processing complexity of the secondary ONT are reduced. Further, network construction costs of the entire network.

In a first possible implementation of the first aspect, the processing method further includes: The primary ONT queries the transmission path correspondence table based on the destination address in the downstream service data packet to determine the transmission path. The transmission path includes a transmission path between the primary ONT and the secondary ONT and the transmission path between the secondary ONT and the user terminal. The transmission path identifier at least includes indication information of the transmission path between the secondary ONT and the user terminal.

With reference to the first aspect or the first possible implementation of the first aspect, in a second possible implementation of the first aspect, the transmission path identifier is a port number of a physical port on the secondary ONT, or a logical link identifier of a wireless link.

With reference to any one of the first aspect or the first or second possible implementations of the first aspect, in a third possible implementation of the first aspect, the method further includes: The primary ONT receives a first message sent by the secondary ONT. The first message includes indication information of a length or a buffer size of a to-be-sent queue on at least one user terminal. The primary ONT allocates an upstream bandwidth to the secondary ONT based on the length or the buffer size that is of the to-be-sent queue on the at least one user terminal and that is indicated in the first message.

With reference to any one of the first aspect or the first to fourth possible implementations of the first aspect, in a fifth possible implementation of the first aspect, the destination address is information, such as a MAC address, an IP address, or a user name of the user terminal, that can identify different user terminals.

In a first possible implementation of the first aspect, the transmission path correspondence table further includes a type of service data. In this way, data of different service types may correspond to different transmission paths.

According to a second aspect, an embodiment of the present invention provides a cascaded optical network termination ONT processing method, including:
A secondary ONT receives an upstream service data packet from a user terminal, adds, as a transmission path identifier to the upstream service data packet, information about a user interface for receiving the service data packet, and sends, to a primary ONT, the upstream service data packet to which the transmission path identifier is added.

The secondary ONT receives a downstream service data packet from the primary ONT. The service data packet includes a transmission path identifier of a transmission path between the secondary ONT and the user terminal. The secondary ONT determines the user interface based on the transmission path identifier. The secondary ONT sends service data in the downstream service data packet to the user terminal through the user interface.

According to this embodiment, the secondary ONT may directly send a service packet to the user terminal based on information about the transmission path identifier sent by the primary ONT, and addressing of a forwarding path is not required on the secondary ONT. In this way, forwarding efficiency of the secondary ONT is improved, and a forwarding module is also not disposed on the ONT, to reduce hardware costs of the secondary ONT.

In a first possible implementation of the second aspect, the method further includes: The secondary ONT sends a first message to the primary ONT. The first message includes indication information of a length or a buffer size of a to-be-sent queue on at least one user terminal.

With reference to the second aspect or the first possible implementation of the second aspect, in a second possible implementation of the second aspect, the method further includes: The secondary ONT sends, to the primary ONT via a low-delay channel, a message including the indication information.

With reference to any one of the second aspect and the first or second possible implementations of the second aspect, in a third possible implementation of the second aspect, the transmission path identifier is a port number of a physical port on the secondary ONT, or a logical link identifier of a wireless link.

According to a third aspect, an embodiment of the present invention provides an optical network termination ONT, including a forwarding module, a service module, and a memory.

The service module is configured to: obtain an upstream service data packet from a secondary ONT. The upstream service data packet includes a user terminal identifier and a transmission path identifier of a transmission path through which a user terminal accesses the secondary ONT. At least a part of data in the service data packet is sent by the user terminal to the secondary ONT. The service module is configured to establish a transmission path correspondence table. The transmission path correspondence table includes a correspondence between the user terminal identifier, the transmission path identifier, and an identifier of the secondary ONT.

The memory 606 is configured to store the transmission path correspondence table.

The service module 605 is further configured to receive a downstream service data packet from an OLT. The downstream service data packet includes a destination address, and the destination address corresponds to one user terminal identifier. The service module 605 is further configured to add, after a corresponding transmission path identifier is found in the transmission path correspondence table based on the user terminal identifier corresponding to the destination address, the transmission path identifier to the downstream service data packet.

The forwarding module 604 is configured to send, to the secondary ONT, the downstream service data packet to which the transmission path identifier is added. The transmission path identifier indicates the secondary ONT to send the downstream service data packet through a transmission path corresponding to the transmission path identifier.

In a first possible implementation of the third aspect, the forwarding module 604 is further configured to query the transmission path correspondence table based on the destination address in the downstream service data packet to determine the transmission path. The transmission path includes a transmission path between the primary ONT and the secondary ONT and the transmission path between the secondary ONT and the user terminal. The transmission path identifier at least includes indication information of the transmission path between the secondary ONT and the user terminal.

With reference to the third aspect or the first possible implementation of the third aspect, the transmission path identifier is a port number of a physical port on the secondary ONT, or a logical link identifier of a wireless link.

With reference to the third aspect or the first possible implementation of the third aspect, in a second possible implementation of the third aspect. The service module 605 is further configured to receive a first message sent by the secondary ONT. The first message includes indication information of a length or a buffer size of a to-be-sent queue on at least one user terminal. The service module 605 is further configured to allocate an upstream bandwidth to the secondary ONT based on the length or the buffer size that is of the to-be-sent queue on the at least one user terminal and that is indicated in the first message.

With reference to any one of the third aspect or the first or second possible implementations of the third aspect, in a third possible implementation of the third aspect, the destination address is information, such as a MAC address, an IP address, or a user name of the user terminal, that can identify different user terminals.

With reference to any one of the third aspect or the first to third possible implementation of the third aspect, in a fourth possible implementation of the third aspect, the transmission path correspondence table further includes a type of service data. In this way, data of different service types may correspond to different transmission paths.

According to a fourth aspect, an embodiment of the present invention provides a secondary optical network termination ONT, including a service module 705.

The service module is configured to: obtain an upstream service data packet from a user terminal, add, as a transmission path identifier to the upstream service data packet, information about a user interface of the service data packet, and send, to a primary ONT, the upstream service data packet to which the transmission path identifier is added.

The service module is configured to receive a downstream service data packet from the primary ONT. The service data packet includes a transmission path identifier of a transmission path between the secondary ONT and the user terminal. The service module is configured to determine the user interface based on the transmission path identifier, to send service data in the downstream service data packet through the user interface.

In a first possible implementation of the fourth aspect, the service module is further configured to send a first message to the primary ONT. The first message includes indication information of a length or a buffer size of a to-be-sent queue on at least one user terminal.

According to a fifth aspect, an embodiment of the present invention provides a primary ONT, including a processor, a transceiver, and a memory. When the access point runs, the processor executes computer instructions, and collaborates with the transceiver to perform the method according to any one of the first aspect or the possible implementations of the first aspect.

According to a sixth aspect, an embodiment of the present invention provides a secondary ONT, including a processor, a transceiver, and a memory. When the access point runs, the processor executes computer instructions, and collaborates with the transceiver to perform the method according to any one of the second aspect or the possible implementations of the second aspect.

According to a seventh aspect, an embodiment of the present invention provides a cascaded optical network termination ONT system, including at least one primary ONT described above and at least one secondary ONT described above.

According to this embodiment, in the system, the primary ONT directly controls a forwarding path of the secondary ONT, so that the secondary ONT can directly send a service packet to the user terminal based on information about the transmission path identifier sent by the primary ONT, and addressing of the forwarding path is not required on the secondary ONT. In this way, processing efficiency of the system is improved, a hardware structure of the secondary ONT is also simplified, and therefore, hardware costs and processing complexity of the secondary ONT are reduced. Further, network construction costs of an entire network are reduced.

### BRIEF DESCRIPTION OF DRAWINGS

FIG. 1 is a schematic diagram of a passive optical network architecture;
FIG. 2 is a schematic diagram of a cascaded ONT network;
FIG. 3 is a schematic diagram of a structure of a primary ONT;
FIG. 4 is a schematic diagram of a structure of a secondary ONT;
FIG. 5 is a schematic flowchart of a cascaded ONT processing method according to an embodiment of the present invention;
FIG. 6 is a schematic diagram of a structure of a primary ONT according to an embodiment of the present invention;
FIG. 7 is a schematic diagram of a structure of a secondary ONT according to an embodiment of this application;
FIG. 8 is a schematic flowchart of a cascaded ONT processing method in an upstream direction according to an embodiment of this application;
FIG. 9 is a schematic flowchart of a cascaded ONT processing method in a downstream direction according to an embodiment of this application;
FIG. 10 is a schematic diagram of a structure of another primary ONT according to an embodiment of the present invention; and
FIG. 11 is a schematic diagram of a structure of another secondary ONT according to an embodiment of this application.

### DESCRIPTION OF EMBODIMENTS

In the specification, claims, and accompanying drawings of this application, terms "first", "second", "third", "fourth", and the like are intended to distinguish between similar objects but do not necessarily indicate a specific sequence or order. It should be understood that the terms used in such a way are interchangeable in proper circumstances, so that embodiments of this application described herein can be implemented in an order other than the order illustrated or described herein. In addition, terms "include" and "have" and any other variants thereof are intended to cover the non-exclusive inclusion. For example, processes, methods, systems, products, or devices that include a list of steps or units is not necessarily limited to those expressly listed steps or units, but may include other steps or units not expressly listed or inherent to these processes, methods, products, or devices.

A PON is a point-to-multipoint optical access technology. A PON interface is a port for data connection in a communication network using the PON. A transmission medium connected to the PON interface is an optical fiber, and may be configured to receive or transmit optical signals. For example, as shown in FIG. 1, an OLT and an ONT are connected through the PON interface, and the OLT may be connected to a plurality of ONTs through one PON interface. Various user terminals are connected to an external network via ONTs. When there are a large quantity of terminals, an internal network may need to be set up first and then connected to the ONTs.

To meet a high-quality internet access requirement of a plurality of terminals inside a user home, a home all-optical network is proposed. In this network, a primary ONT device is set as a gateway responsible for ingress and egress nodes of a home network and an upper-layer network. The primary ONT is cascaded by a plurality of secondary ONTs, and the secondary ONTs are distributed in corners of a home to provide interfaces for a user to access network. As shown in FIG. 2, an OLT and a primary ONT are connected through an optical fiber, and the primary ONT and a secondary ONT are also connected through an optical fiber. Generally, a direction from the OLT to an ONT is referred to as a downstream direction, and a direction from the ONT to the OLT is referred to as an upstream direction. In the downstream direction, a signal is transmitted in a broadcast manner. In the upstream direction, a signal is transmitted in a time division multiplexing (time division multiplexing, TDM) mode. The primary ONT performs dynamic bandwidth assignment (dynamic bandwidth assignment, DBA) for upstream transmission timeslot assignment for each secondary ONT in compliance with a passive optical network PON protocol. The primary ONT and the secondary ONT are named based on a relative relationship between upstream and downstream, for distinguishing between the primary ONT and the secondary ONT. In some scenarios, the primary ONT may be considered as a gateway, and the secondary ONT may be considered as an application point (application point, AP). However, regardless of a form and a name, any device that is connected to an OLT and that performs functions of an ONT falls within the protection scope of embodiments.

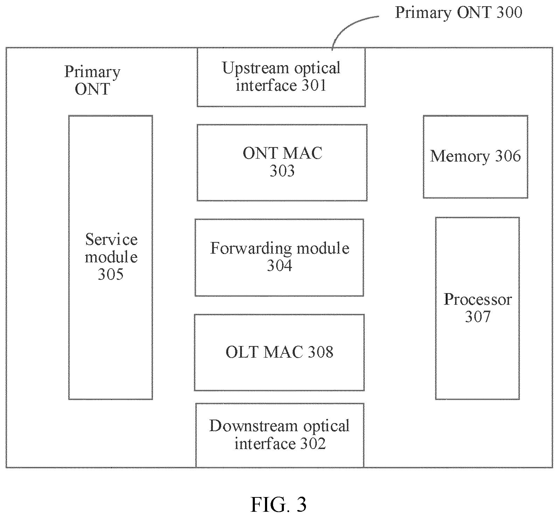

As shown in FIG. 3, a primary ONT 300 includes an upstream optical interface 301, a downstream optical interface 302, an ONT media access control (media access control, MAC) module (which is referred to as an ONT MAC below) 303, an OLT media access control module (which is referred to as an OLT MAC below) 308, a forwarding module 304, a service module 305, a memory 306, and a processor 307.

The upstream optical interface 301 is configured to connect to an upper-layer optical device. The downstream optical interface 302 is configured to connect to a lower-layer optical device.

The ONT MAC 303 includes one or more PON MAC chips, and is configured to perform protocol processing of a PON media access control (media access control, MAC) layer on a packet exchanged between the primary ONT 300 and the upper-layer device, and parse or encapsulate a PON packet.

The OLT MAC 308 includes one or more PON MAC chips, and is configured to perform protocol processing of a PON media access control (media access control, MAC) layer on a packet exchanged between the primary ONT 300 and the lower-layer device, and parse or encapsulate a packet.

The forwarding module 304 includes a component or a chip configured to implement a forwarding function, and may be configured to implement forwarding of a layer 2 and/or layer 3 network protocol, for example, local area network switch (LAN switch, LSW) forwarding or IP routing (IP Routing), and may further perform network processing (network processing, NP), traffic management (traffic management, TM), or the like.

The service module 305 may include one or more of the following: a POTS (Plain Old Telephone Service) module providing a voice call access function, a GE (Gigabit Ethernet) module providing a broadband access function, an IPTV module providing an IP television (internet protocol television, IPTV) service, and a Wi-Fi (Wireless Fidelity) module providing a wireless access function; is configured to perform management, including quality of service (QoS) management, port addressing, service priority setting, user right authentication management, or the like on service data on a control plane; and is mainly implemented by software.

The memory 306 is configured to store upstream and downstream packets and intermediate data. For example, the memory 306 may be a double data rate (double data rate, DDR) memory, a random access memory (random access memory, RAM), a flash memory, or the like.

The processor 307 is configured to cooperate with the service module 305 and the forwarding module 304 to process the service data.

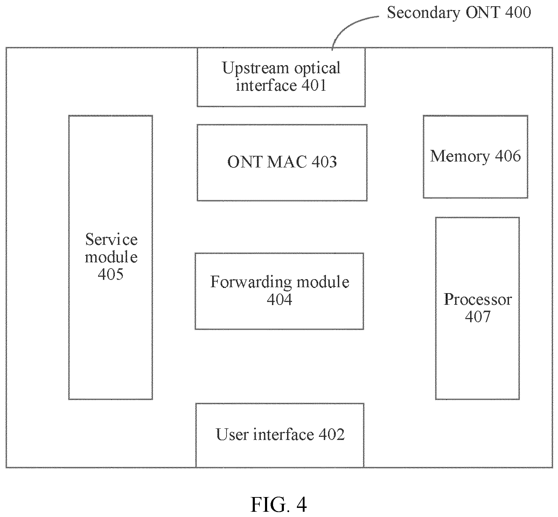

As shown in FIG. 4, a secondary ONT 400 usually includes an upstream optical interface 401, a user interface 402, an ONT MAC 403, a forwarding module 404, a service module 405, a memory 406, and a processor 407. The upstream optical interface 401 is configured to connect to a primary ONT 300. The user interface 402 is connected to a user terminal device, and is configured to connect the user terminal device to a network. The user interface 402 may be a physical port or an air interface. The ONT MAC 403, the forwarding module 404, the service module 405, the memory 406, and the processor 407 have functions similar to those of the corresponding modules 303 to 307 on the primary ONT described above, and details are not described herein again.

Optionally, the primary ONT 300 may also include at least one user interface. The primary ONT 300 and/or the secondary ONT 400 may further include one or more modules configured to perform Ethernet MAC layer protocol processing and Ethernet physical layer protocol processing.

Because both the secondary ONT and the primary ONT each are configured with a forwarding module, processing in a forwarding phase is partially repeated, and processing procedures are not simple, resulting in insufficient hardware resource utilization.

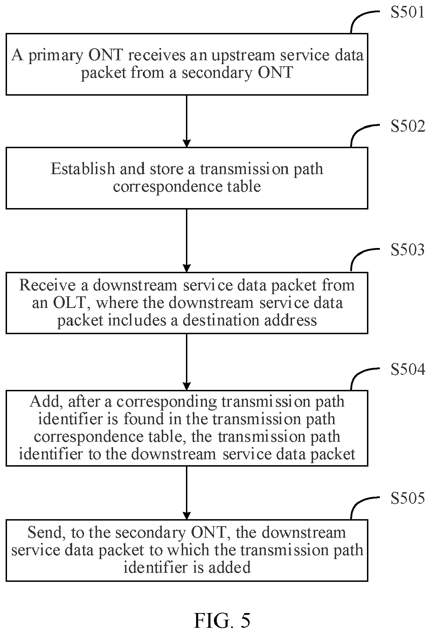

FIG. 5 is a cascaded ONT processing method according to an embodiment of this application. As shown in FIG. 5, the method includes the following steps.

Step 501: A primary ONT receives an upstream service data packet from a secondary ONT. The upstream service data packet includes a user terminal identifier and a transmission path identifier of a transmission path through which a user terminal accesses the secondary ONT. At least a part of data in the service data packet is sent by the user terminal to the secondary ONT.

Step 502: The primary ONT establishes and stores a transmission path correspondence table. The transmission path correspondence table includes a correspondence between the user terminal identifier, the transmission path identifier, and an identifier of the secondary ONT.

The transmission path correspondence table may further include a type of service data. In this way, data of different service types may correspond to different transmission paths, to implement more refined path selection. Details are shown in Table 1 below.

**Table 1 Transmission path correspondence table 1**

| Type of service data | Terminal user identifier | Identifier of a secondary ONT | Transmission path identifier |
|---|---|---|---|
| Service 1 | User A | 11111 | 01 |
| Service 1 | User B | 22222 | 01 |
| Service 2 | User C | 11111 | 03 |
| Service 3 | User D | 44444 | 04 |

Step 503: The primary ONT receives a downstream service data packet from an OLT. The downstream service data packet includes a destination address, and the destination address corresponds to one user terminal identifier.

The destination address may be information, such as a MAC address, an IP address, or a user name of the user terminal, that can identify different user terminals.

Step 504: The primary ONT adds, after a corresponding transmission path identifier is found in the transmission path correspondence table based on the user terminal identifier corresponding to the destination address, the transmission path identifier to the downstream service data packet.

Step 505: The primary ONT sends, to the secondary ONT, the downstream service data packet to which the transmission path identifier is added. The transmission path identifier indicates the secondary ONT to send the downstream service data packet through a transmission path corresponding to the transmission path identifier.

In an embodiment, after step 503, the method further includes step 5031 (which is not shown in the figure). The primary ONT queries the transmission path correspondence table based on the destination address in the downstream service data packet to determine the transmission path. The transmission path includes both a transmission path between the primary ONT and the secondary ONT and the transmission path between the secondary ONT and the user terminal. The transmission path identifier at least includes indication information of the transmission path between the secondary ONT and the user terminal.

The secondary ONT and the user terminal may be connected in a wired manner through an Ethernet cable, a twisted pair cable, or the like, or may be connected in a wireless manner through Wi-Fi Bluetooth, or the like. In a wired connection scenario, the foregoing transmission path identifier identifying the transmission path between the secondary ONT and the user terminal may be a port number of a physical port on the secondary ONT, and the port number is used for distinguishing between physical lines. Because an egress port and an ingress port for data transmission between an ONT and one user terminal are a same physical port, the physical port corresponding to the port number is both the egress port of the ONT and the ingress port of the ONT. In a wireless connection scenario, the foregoing transmission path identifier identifying the transmission path between the secondary ONT and the user terminal may alternatively be a logical link identifier, and the logical link identifier is used for distinguishing between wireless links. Examples of transmission path correspondence tables corresponding to the two scenarios are shown in Table 2 and Table 3 respectively.

**Table 2 Transmission path correspondence table 2**

| Type of service data | Terminal user identifier | ID of a secondary ONT | Port number of the secondary ONT |
|---|---|---|---|
| Service 1 | User A | 11111 | #01 |
| Service 1 | User B | 22222 | #02 |
| Service 2 | User C | 11111 | #03 |
| Service 3 | User D | 44444 | #04 |

**Table 3 Transmission path correspondence table 3**

| Type of service data | Terminal user identifier | ID of a secondary ONT | Logical link identifier on the secondary ONT |
|---|---|---|---|
| Service 1 | User A | 11111 | 011 |
| Service 1 | User B | 22222 | 012 |
| Service 2 | User C | 11111 | 013 |
| Service 3 | User D | 44444 | 014 |

For example, the transmission path between the primary ONT and the secondary ONT may be identified using the identifier ID of the secondary ONT or a MAC address of the secondary ONT. The transmission path between the secondary ONT and the user terminal may be identified using a number of an egress port of the secondary ONT. The establishment of the transmission path correspondence table on the primary ONU is equivalent to that a user interface of the secondary ONT is virtualized locally on the primary ONT. This is similar to management of a local user interface, that is, a transmission path to the user interface of each secondary ONT is directly managed. The secondary ONT may directly send a service packet to the user terminal based on information about the transmission path identifier sent by the primary ONT, and addressing of a forwarding path is not required on the secondary ONT. In this way, forwarding efficiency of the secondary ONT is improved, and a forwarding module may not be disposed on the ONT, to reduce hardware costs of the secondary ONT. Further, network construction costs of an entire network are reduced.

Further, the processing method may further include: The primary ONT receives a first message from the secondary ONT. The first message includes indication information of a length or a buffer size of a to-be-sent queue on at least one user terminal. The primary ONT allocates an upstream bandwidth to the secondary ONT based on the indication information, in the first message, that is of the length or the buffer size of the to-be-sent queue on the at least one user terminal.

Specifically, the primary ONT may obtain, through a plurality of secondary ONTs, lengths or buffer sizes of to-be-sent queues of all user terminals connected to each secondary ONT, to evaluate an amount of data to be sent by each user terminal, and further obtain an amount of upstream data to be sent by the secondary ONT connected to these user terminals, to determine a bandwidth requirement of the secondary ONT. Therefore, the primary ONT can allocate a proper upstream bandwidth to the ONT based on the bandwidth requirement of the secondary ONT.

Correspondingly, on the secondary ONT side, in an upstream direction, the secondary ONT receives an upstream service data packet from the user terminal, adds, as a transmission path identifier to the upstream service data packet, information about a user interface for receiving the service data packet, and sends, to the primary ONT, the upstream service data packet to which the transmission path identifier is added. In a downstream direction, the secondary ONT receives a downstream service data packet from the primary ONT, where the service data packet includes the transmission path identifier of the transmission path between the secondary ONT and the user terminal. The secondary ONT determines the user interface based on the transmission path identifier. The secondary ONT sends service data in the downstream service data packet to the user terminal through the user interface.

Further, the method may further include: The secondary ONT sends a first message to the primary ONT. The first message includes indication information of a length or a buffer size of a to-be-sent queue on at least one user terminal.

It should be noted that, in the downlink direction, the downlink data service packet that is received by the primary ONT and that is from the OLT and the downlink data service packet sent to the user terminal by the secondary ONT are not in an inclusive or exclusive relationship. It means that respective packet payloads (payloads) include at least a part of same service data. The upstream direction shares a same principle. A person of ordinary skill in the art should understand that, when same service data passes through different network nodes, a packet header including the service data may be adaptively modified, for example, a source address is modified, a layer of the packet header is added or removed, or a check bit is added after modulation and demodulation. Because these differences are not main concern of embodiments of the present invention, even if a same packet name appears in processing steps in different devices in the whole text, for example, for a case that a secondary ONT receives a data service packet and forwards a processed data service packet, this cannot be restrainedly understood that the data service packet received from the secondary ONT is forwarded without being changed, and even if adjustment is made to a packet header to a specific extent, the adjustment still falls within the scope of embodiments.

In addition, data transmission is performed between the primary ONT and the secondary ONT via optical signals, and data transmission is also performed between the primary ONT and the OLT via optical signals. In the foregoing description, receiving of a service data packet by the primary ONT is merely described in terms of functions, and does not specifically mean that the service data packet is directly received. A person of ordinary skill in the art should understand that the primary ONT receives an upstream optical signal from the secondary ONT, where the upstream optical signal carries an upstream service data packet; and the primary ONT receives a downstream optical signal from the OLT, where the downstream optical signal carries a downstream service data packet. Only after the primary ONT modulates, demodulates, and parses the upstream optical signal and the downstream optical signal, corresponding upstream service data and downstream service data can be obtained. In this embodiment, to simplify descriptions, the foregoing process is described as follows: The primary ONT receives the upstream/downstream service data packet. In addition, it should also be understood that an/a upstream/downstream service data packet sent by the secondary ONT is carried in optical signals and sent out.

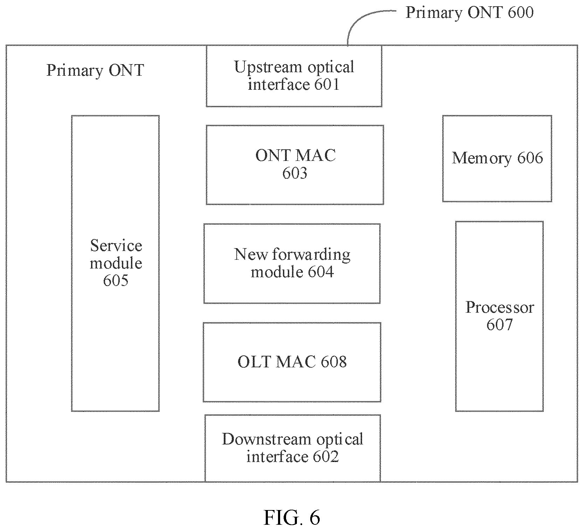

An embodiment of this application provides a new ONT, which is acting as a primary ONT 600. As shown in FIG. 6, the primary ONT 600 includes an upstream optical interface 601, a downstream optical interface 602, an ONT MAC 603, an OLT MAC 608, a new forwarding module 604, a service module 605, a memory 606, and a processor 607. In comparison with FIG. 3, at least functions of the forwarding module 604, the service module 605, and the memory 606 are different. The following describes the three modules in detail. For functions of other units, for example, functions of the upstream optical interface 601, the downstream optical interface 602, the ONT MAC 603, and the OLT MAC 608, unless otherwise specified, refer to the descriptions of the modules corresponding to FIG. 3.

The service module 605 is configured to obtain an upstream service data packet from a secondary ONT. The upstream service data packet includes a user terminal identifier and a transmission path identifier of a transmission path through which a user terminal accesses the secondary ONT. At least a part of data in the service data packet is sent by the user terminal to the secondary ONT. The service module 605 is further configured to establish a transmission path correspondence table. The transmission path correspondence table includes a correspondence between the user terminal, the transmission path identifier, and an identifier of the secondary ONT. The service module 605 is further configured to receive a downstream service data packet from an OLT. The downstream service data packet includes a destination address, and the destination address corresponds to one user terminal identifier. The service module 605 adds, after a corresponding transmission path identifier is found in the transmission path correspondence table based on the user terminal identifier corresponding to the destination address, the transmission path identifier to the downstream service data packet.

The memory 606 is configured to store the transmission path correspondence table.

The forwarding module 604 is configured to send, to the secondary ONT, the downstream service data packet to which the transmission path identifier is added. The transmission path identifier indicates the secondary ONT to send the downstream service data packet through a transmission path corresponding to the transmission path identifier. The forwarding module 604 is further configured to query the transmission path correspondence table based on the destination address in the downstream service data packet to determine the transmission path. The transmission path includes both a transmission path between the primary ONT and the secondary ONT and the transmission path between the secondary ONT and the user terminal. The transmission path identifier at least includes indication information of the transmission path between the secondary ONT and the user terminal.

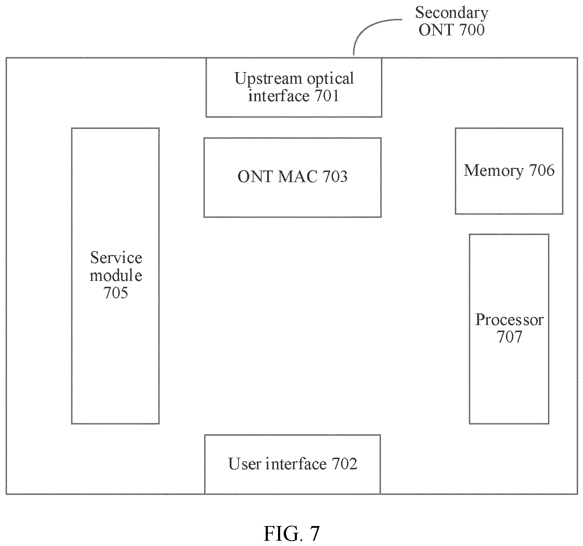

An embodiment of this application further provides a new ONT, which is acting as a secondary ONT 700. As shown in FIG. 7, the secondary ONT 700 includes an upstream optical interface 701, a user interface 702, an ONT MAC 703, a service module 705, a memory 706, and a processor 707. In comparison with FIG. 4, there is no forwarding module, and functions of the service module 705 are different. The following describes the service module 705 in detail. For functions of other modules, for example, functions of the upstream optical interface 701, the user interface 702, the ONT MAC 703, the memory 706, and the processor 707, unless otherwise specified, refer to the descriptions of the module corresponding to FIG. 4.

The service module 705 is configured to: obtain an upstream service data packet from a user terminal, add, as a transmission path identifier to the upstream service data packet, information about a user interface of the service data packet, and send, to a primary ONT, the upstream service data packet to which the transmission path identifier is added.

The service module 705 is configured to receive a downstream service data packet from the primary ONT. The service data packet includes a transmission path identifier of a transmission path between the secondary ONT and the user terminal. The service module 705 is configured to determine the user interface based on the transmission path identifier, to send service data in the downstream service data packet through the user interface.

The service module 705 is further configured to send a first message to the primary ONT. The first message includes indication information of a length or a buffer size of a to-be-sent queue on at least one user terminal.

In comparison with FIG. 4, the secondary ONT 700 does not include a forwarding module, and the service module 705 is different from the service module 405 in FIG. 4. Correspondingly, the forwarding module 304 on the primary ONT 600 directly manages and controls a data forwarding path of the secondary ONT 700, and completes data scheduling before sending the service data to the secondary ONT 700. After receiving the data from the primary ONT 600, the secondary ONT 700 sends the data to the user terminal directly based on a path indication carried in the data.

The following describes a processing procedure with reference to the structures of the primary ONT 600 and the secondary ONT 700 that are respectively shown in FIG. 6 and FIG. 7.

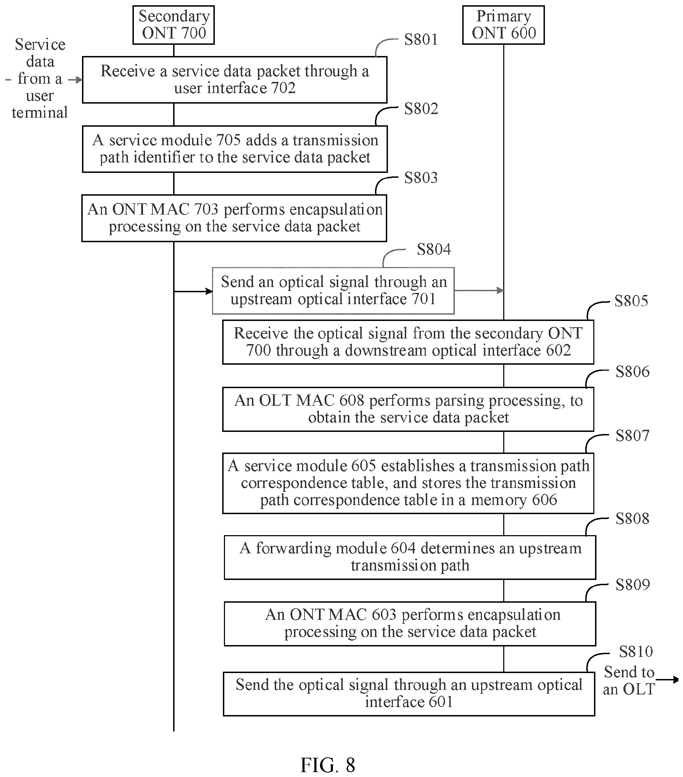

In an upstream direction, as shown in FIG. 8, steps S801 to S811 are included.

Step S801: The secondary ONT 700 receives a service data packet from the user terminal through the user interface 702.

Step S802: The service module 705 matches or sets a corresponding transmission control parameter and a transmission resource based on a type (a voice service, a broadband access service, an IPTV, or the like) of the service data packet. The service module 705 adds, as a transmission path identifier to the service data packet, information about a user interface for receiving the service data packet.

The transmission path identifier may be information about a user interface, that is, a number of an ingress port of the secondary ONT 700.

Step S803: The ONT MAC 703 performs ONT-side PON protocol layer encapsulation processing on the service data packet to which the transmission path identifier is added.

Step S804: Send, to the primary ONT 600 through the upstream optical interface 701, an optical signal carrying service data.

Step S805: The primary ONT 600 receives the optical signal from the secondary ONT 700 through the downstream optical interface 602.

Step S806: The OLT MAC 608 performs OLT-side PON protocol parsing processing, to obtain the service data packet. The service data includes the transmission path identifier in the service data packet.

A determined transmission path includes both a transmission path between the primary ONT and the secondary ONT and a transmission path between the secondary ONT and the user terminal.

Step S807: The service module 605 at least matches or sets the corresponding transmission control parameter and the corresponding transmission resource based on the type (a voice service, a broadband access service, an IPTV, or the like) of the service data packet and the transmission path identifier of the service data packet. The service module 605 establishes a transmission path correspondence table including the following: the user terminal, the transmission path identifier, and an ID of the secondary ONT 700; and stores the transmission path correspondence table in the memory 606.

Step S808: The forwarding module 604 performs layer 2 Ethernet MAC layer forwarding and/or layer 3 routing and addressing processing based on user terminal address information or device identification information carried in the service data packet, to determine an upstream transmission path.

Step S809: The ONT MAC 603 performs ONT-side PON protocol layer encapsulation processing.

Step S810: Send the optical signal to the OLT through the upstream optical interface 601.

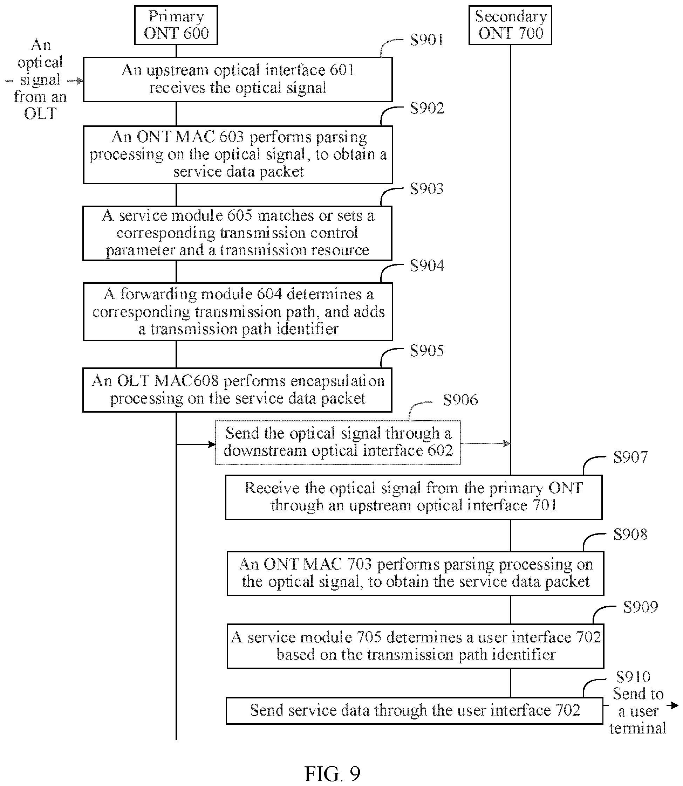

In a downstream direction, as shown in FIG. 9, steps S901 to S911 are included.

Step S901: The primary ONT 600 receives an optical signal from the OLT through the upstream optical interface 601.

Step S902: The ONT MAC 603 performs ONU-side PON protocol parsing processing on the optical signal to obtain a service data packet. The service data packet may be an Ethernet packet or a packet in another protocol format.

Step S903: The service module 605 at least matches or sets a corresponding transmission control parameter and a transmission resource based on a type (a voice service, a broadband access service, an IPTV, or the like) of the service data packet.

Step S904: The forwarding module 604 performs layer 2 Ethernet MAC layer forwarding and/or layer 3 routing and addressing based on user terminal address information or device identification information carried in the service data packet. A determined transmission path includes both a transmission path between the primary ONT and the secondary ONT and a transmission path between the secondary ONT and the user terminal. The forwarding module 604 adds a transmission path identifier of the transmission path between the secondary ONT and the user terminal to the service data packet.

Step S905: The OLT MAC 608 performs OLT-side PON protocol layer encapsulation processing on the service data packet to which the transmission path identifier is added.

Step S906: Send, to the target secondary ONT 700 through the downstream optical interface 602, the encapsulated service data packet modulated on the optical signal.

Step S907: The secondary ONT 700 receives the optical signal from the primary ONT 600 through the upstream optical interface 701.

Step S908: The ONT MAC 703 on the secondary ONT 700 performs ONU-side PON protocol parsing processing on the optical signal, to obtain the service data packet. The service data packet includes the transmission path identifier of the transmission path between the secondary ONT 700 and the user terminal.

Step S909: The service module 705 matches or sets the corresponding transmission control parameter and the corresponding transmission resource based on the type of the service data packet. The service module 705 determines the user interface 702 based on the transmission path identifier of the transmission path between the secondary ONT 700 and the user terminal.

Step S910: Send service data to the user terminal through the user interface 702.

Further, the service module 705 on the secondary ONT 700 may include a Wi-Fi service module, the user interface 702 on the ONT 700 is a Wi-Fi air interface, and the user terminal is a Wi-Fi terminal. When a Wi-Fi service is processed, because Wi-Fi service data is transmitted, through an air interface, using a wireless signal, link channels between user terminals and the secondary ONT are distinguished using logical link identifiers, and the transmission path identifier is a logical link identifier.

Therefore, in the downstream direction, the transmission path between the user terminal and the secondary ONT 700 in step S904 is a Wi-Fi logical link identifier. In step S910, the service data is sent to the user terminal through the user interface 702, namely, the Wi-Fi air interface.

Further, the primary ONT 600 needs to interact with the Wi-Fi service module to obtain Wi-Fi air interface information and Wi-Fi user queue information, to determine a logical link identifier on the secondary ONT 700 corresponding to a target user.

According to the solution in this embodiment, a logical link identifier of a path selected for sending data to the target user can be directly obtained by performing PON protocol parsing processing on a packet by the ONT MAC 703 of the secondary ONT 700, and the logical link identifier is stored in the memory 706. After completing data processing, the Wi-Fi service module selects a corresponding Wi-Fi channel based on the logical link identifier and sends the processed data to the user.

Correspondingly, in the upstream direction, a transmission path identifier of a transmission path for receiving a Wi-Fi service data packet is a Wi-Fi logical link identifier. In step S802, the Wi-Fi service module adds, to the Wi-Fi service data packet, a logical link identifier of a path for transmitting the Wi-Fi service data packet. In step S807, the service module 605 further needs to complete reordering of Wi-Fi service data packets based on transmission path identifiers of the Wi-Fi service data packets.

Further, the memory 606 on the primary ONT 600 is further configured to store Wi-Fi packets and packet queue information that are of a plurality of user terminals. The plurality of user terminals are connected to the primary ONT 600 through at least one secondary ONT 700. Further, the Wi-Fi service module of the secondary ONT 700 may further obtain, from the user terminal, a message indicating a length or a buffer size of a to-be-sent queue on the user terminal, and then send the length or the buffer size of the to-be-sent queue to the primary ONT 600 by using an upstream Wi-Fi control packet. In this way, the primary ONT 600 may allocate, based on bandwidth requirements of all user terminals, an upstream bandwidth to the secondary ONT 700 connected to the plurality of user terminals, to match a bandwidth requirement of a user terminal connected to each secondary ONT 700. Because the Wi-Fi control packet has a high delay requirement, the primary ONT 600 and the secondary ONT 700 perform transmission through a dedicated low-delay channel. The low-delay channel is described relative to a normal service data transmission channel. In comparison with the normal service data transmission channel, the low-delay channel can better control a transmission delay, for example, the low-delay channel has a higher priority and better signal robustness to ensure a low delay.

The Wi-Fi service module of the primary ONT 600 performs unified scheduling and control on Wi-Fi packets and packet queues that are of all user terminals, and sends an indication to the secondary ONT 700 by using a downstream Wi-Fi control packet. The Wi-Fi service module of the secondary ONT 700 processes a parsed Wi-Fi service data packet based on information about the obtained indication. The processing includes determining upstream bandwidths, or priorities, or the like for different Wi-Fi user terminals.

According to the solution of this embodiment, because service requests and service data that are of all Wi-Fi user terminals are uniformly scheduled and managed by the primary ONT 600, a size of to-be-sent data of each user terminal is obtained in advance, so that bandwidths of all secondary ONT devices 700 can be flexibly and evenly scheduled and pre-allocated in a centralized manner. In addition, because the upstream Wi-Fi control packet is exchanged between the primary ONT 600 and the secondary ONT 700 through the specific low-delay channel, it is ensured that bandwidth allocation information is delivered in time, and a bandwidth of each user terminal can be scheduled and allocated in time, to improve system bandwidth utilization.

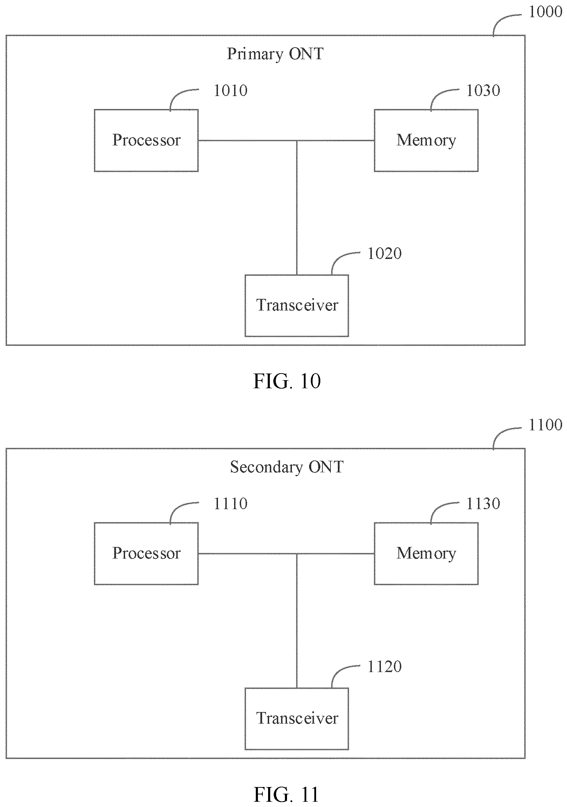

FIG. 10 shows a primary ONT 1000 according to an embodiment of this application. As shown in FIG. 10, the primary ONT 100 includes a processor 1010, a transceiver 1020, and a memory 1030. When the access point runs, the processor 1010 executes computer instructions, and collaborates with the transceiver 1020 to perform the following method:
receiving an upstream service data packet from a secondary ONT, where the upstream service data packet includes a user terminal identifier and a transmission path identifier of a transmission path from a user terminal to the secondary ONT, and at least a part of data in the service data packet is sent by the user terminal to the secondary ONT;
establishing a transmission path correspondence table and storing the transmission path correspondence table in the memory 1030, where the transmission path correspondence table includes a correspondence between the user terminal identifier, the transmission path identifier, and an identifier of the secondary ONT;
receiving a downstream service data packet from an OLT, where the downstream service data packet includes a destination address, and the destination address corresponds to one user terminal identifier;
adding, after a corresponding transmission path identifier is found in the transmission path correspondence table based on the user terminal identifier corresponding to the destination address, the transmission path identifier to the downstream service data packet; and
sending, to the secondary ONT, the downstream service data packet to which the transmission path identifier is added, where the transmission path identifier indicates the secondary ONT to send the downstream service data packet through a transmission path corresponding to the transmission path identifier.

FIG. 11 shows a secondary ONT 1100 according to an embodiment of this application. As shown in FIG. 11, the secondary ONT 100 includes a processor 1110, a transceiver 1120, and a memory 1130. When the access point runs, the processor 1110 executes computer instructions, and collaborates with the transceiver 1120 to perform the following method:
receiving an upstream service data packet from a user terminal, adding, as a transmission path identifier to the upstream service data packet, information about a user interface for receiving the service data packet, and sending, to a primary ONT, the upstream service data packet to which the transmission path identifier is added;
receiving a downstream service data packet from the primary ONT, where the service data packet includes a transmission path identifier of a transmission path between the secondary ONT and the user terminal; determining the user interface based on the transmission path identifier; and sending service data in the downstream service data packet to the user terminal through the user interface.

For details of specific actions in the steps in the foregoing two embodiments, refer to the embodiments corresponding to FIG. 5, FIG. 8, and FIG. 9. Only execution bodies are different, and others are basically the same. Details are not described again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in the ASIC.

All or some of the foregoing embodiments may be implemented using software, hardware, firmware, or any combination thereof. When software is used for implementation, a part or all of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted using the computer-readable storage medium. The computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Finally, it should be noted that, the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cascaded optical network termination ONT processing method, comprising:
receiving, by a primary ONT, an upstream service data packet from a secondary ONT, wherein the upstream service data packet comprises a user terminal identifier and a transmission path identifier of a transmission path through which a user terminal accesses the secondary ONT, and at least a part of data in the service data packet is sent by the user terminal to the secondary ONT;
establishing and storing, by the primary ONT, a transmission path correspondence table, wherein the transmission path correspondence table comprises a correspondence between the user terminal identifier, the transmission path identifier, and an identifier of the secondary ONT;
receiving, by the primary ONT, a downstream service data packet from an optical line terminal OLT, wherein the downstream service data packet comprises a destination address, and the destination address corresponds to one user terminal identifier;
adding, by the primary ONT after a corresponding transmission path identifier is found in the transmission path correspondence table based on the user terminal identifier corresponding to the destination address, the transmission path identifier to the downstream service data packet; and
sending, by the primary ONT to the secondary ONT, the downstream service data packet to which the transmission path identifier is added, wherein the transmission path identifier indicates the secondary ONT to send the downstream service data packet through a transmission path corresponding to the transmission path identifier.

2. The processing method according to claim 1, further comprising: querying, by the primary ONT, the transmission path correspondence table based on the destination address in the downstream service data packet to determine the transmission path, wherein the transmission path comprises a transmission path between the primary ONT and the secondary ONT and the transmission path between the secondary ONT and the user terminal, and the transmission path identifier at least comprises indication information of the transmission path between the secondary ONT and the user terminal.

3. The processing method according to claim 2, wherein the transmission path identifier is a port number of a physical port on the secondary ONT, or a logical link identifier of a wireless link.

4. The processing method according to any one of claims 1 to 3, wherein the method further comprises:
receiving, by the primary ONT, a first message sent by the secondary ONT, wherein the first message comprises indication information of a length or a buffer size of a to-be-sent queue on at least one user terminal; and
allocating, by the primary ONT, an upstream bandwidth to the secondary ONT based on the first message.

5. The processing method according to any one of claims 1 to 4, wherein the destination address is information, such as a MAC address, an IP address, or a user name of the user terminal, that can identify different user terminals.

6. The processing method according to any one of claims 1 to 5, wherein the transmission path correspondence table further comprises a type of service data.

7. A cascaded optical network termination ONT processing method, comprising:
receiving, by a secondary ONT, an upstream service data packet from a user terminal, adding, as a transmission path identifier to the upstream service data packet, information about a user interface for receiving the service data packet, and sending, to a primary ONT, the upstream service data packet to which the transmission path identifier is added;
receiving a downstream service data packet from the primary ONT, wherein the service data packet comprises a transmission path identifier of a transmission path between the secondary ONT and the user terminal; determining the user interface based on the transmission path identifier; and sending service data in the downstream service data packet to the user terminal through the user interface.

8. The processing method according to claim 7, wherein the method further comprises: sending, by the secondary ONT, a first message to the primary ONT, wherein the first message comprises indication information of a length or a buffer size of a to-be-sent queue on at least one user terminal.

9. The processing method according to claim 8, wherein the method further comprises: sending, by the secondary ONT to the primary ONT via a low-delay channel, a message comprising the indication information.

10. The processing method according to any one of claims 7 to 9, wherein the transmission path identifier is a port number of a physical port on the secondary ONT, or a logical link identifier of a wireless link.

11. An optical network termination ONT, comprising a forwarding module 604, a service module 605, and a memory 606, wherein
the service module 605 is configured to: obtain an upstream service data packet from a secondary ONT, wherein the upstream service data packet comprises a user terminal identifier and a transmission path identifier of a transmission path through which a user terminal accesses the secondary ONT, and at least a part of data in the service data packet is sent by the user terminal to the secondary ONT; and establish a transmission path correspondence table, wherein the transmission path correspondence table comprises a correspondence between the user terminal identifier, the transmission path identifier, and an identifier of the secondary ONT;
the memory 606 is configured to store the transmission path correspondence table;
the service module 605 is further configured to: receive a downstream service data packet from an OLT, wherein the downstream service data packet comprises a destination address, and the destination address corresponds to one user terminal identifier; add, after a corresponding transmission path identifier is found in the transmission path correspondence table based on the user terminal identifier corresponding to the destination address, the transmission path identifier to the downstream service data packet; and
the forwarding module 604 is configured to send, to the secondary ONT, the downstream service data packet to which the transmission path identifier is added, wherein the transmission path identifier indicates the secondary ONT to send the downstream service data packet through a transmission path corresponding to the transmission path identifier.

12. The ONT according to claim 11, wherein the forwarding module 604 is further configured to query the transmission path correspondence table based on the destination address in the downstream service data packet to determine the transmission path, wherein the transmission path comprises a transmission path between the primary ONT and the secondary ONT and the transmission path between the secondary ONT and the user terminal, and the transmission path identifier at least comprises indication information of the transmission path between the secondary ONT and the user terminal.

13. The ONT according to claim 12, wherein the transmission path identifier is a port number of a physical port on the secondary ONT, or a logical link identifier of a wireless link.

14. The ONT according to any one of claims 1 to 3, wherein the method further comprises: the service module 605 is further configured to: receive a first message sent by the secondary ONT, wherein the first message comprises indication information of a length or a buffer size of a to-be-sent queue on at least one user terminal; and allocate an upstream bandwidth to the secondary ONT based on the first message.

15. The ONT according to any one of claims 11 to 14, wherein the destination address is information, such as a MAC address, an IP address, or a user name of the user terminal, that can identify different user terminals.

16. The ONT according to claim 11, wherein the transmission path correspondence table further comprises a type of service data.

17. A secondary optical network termination ONT, comprising a service module 705, wherein
the service module 705 is configured to: obtain an upstream service data packet from a user terminal, add, as a transmission path identifier to the upstream service data packet, information about a user interface of the service data packet, and send, to a primary ONT, the upstream service data packet to which the transmission path identifier is added;
receive a downstream service data packet from the primary ONT, wherein the service data packet comprises a transmission path identifier of a transmission path between the secondary ONT and the user terminal; and determine the user interface based on the transmission path identifier, to send service data in the downstream service data packet through the user interface.

18. The ONT according to claim 17, wherein the service module 705 is further configured to send a first message to the primary ONT, wherein the first message comprises indication information of a length or a buffer size of a to-be-sent queue on at least one user terminal.

19. A primary ONT 1000, comprising a processor 1010, a transceiver 1020, and a memory 1030, wherein when the primary ONT 1000 runs, the processor 1010 executes computer instructions, and collaborates with the transceiver 1020 to perform the method according to any one of claims 1 to 6.

20. A secondary ONT 1100, comprising a processor 1110 and a transceiver 1120, and a memory 1130, wherein when the access point runs, the processor 1110 executes computer instructions, and collaborates with the transceiver 1120 to perform the method according to any one of claims 7 to 10.

21. A cascaded optical network termination ONT system, comprising at least one primary ONT according to any one of claims 11 to 16 and claim 18, and at least one secondary ONT according to any one of claims 17 and 18 and claim 20.
